# EUROPEAN PATENT SPECIFICATION

(11) **EP 0 976 665 B1**
(45) Date of publication and mention of the grant of the patent: **27.02.2002**
(21) Application number: 99117851.8
(22) Date of filing: 15.06.1993
(51) Int. Cl.: B65D 65/40, B65D 81/20, B32B 27/10

(54) **Base board for packaging of food products**
Unterlagsplatte zum Verpacken von Lebensmitteln
Support pour emballer des produits alimentaires

(30) Priority: 15.06.1992 DK 79392; 25.06.1992 DK 83992
(43) Date of publication of application: 02.02.2000
(62) Divisional of application: 93610038.7
(73) Proprietor: Larsen, Steen, DK-7080 Börkop (DK)
(72) Inventor: Larsen, Steen, DK-7080 Börkop (DK)
(74) Representative: Nielsen, Leif

(56) References cited:
- EP-A- 0 078 560
- GB-A- 2 231 322
- US-A- 3 690 923
- US-A- 3 978 260
- PATENT ABSTRACTS OF JAPAN vol. 008, no. 222 (C-246), 9 October 1984 (1984-10-09) & JP 59 106253 A (KATSUO TASHIRO), 19 June 1984 (1984-06-19)

## Description

The present invention relates to a backing board to be employed at the packing of food products, preferably sides of salmon, fillets and whole salmon, whereby the product is placed on the backing board and thereafter vacuum packed in a plastic sheet, the backing board being made of cardboard laminated with sheet material at both sides.

As food, salmon is regarded a noble kind of fish of high quality, and therefore, it is marketed in a package which correspondingly presents the product and also meets the sanitary demands. Thus, smoked sides of salmon and sliced fillets are typically packed fully stretched or spread on a so-called salmon board and are vacuum packed in a transparent plastic sheet printed with information and ornamentation, preferably multicoloured, but placed such that at least most of the salmon will be visible on the background of the salmon board. The salmon board is rectangular and a little larger than the salmon side and it is basically a piece of cardboard laminated with a lacquered aluminium foil. The quality demands to such salmon boards are high, but, on the other hand they are also required to be non-expensive.

The upper surface of the aluminium foil layer is lacquered with a background colour which displays the salmon; typically a golden or black colour is chosen for the side carrying the salmon and a silver colour is used for the rear side. The salmon is laid directly on the lacquer, which is not particularly suitable. However, a main objection is raised against the aluminium foil itself, as such a foil is not approved for food packing purposes. Furthermore, it is difficult to print on aluminium foil due to poor adhesion, which may result in unwanted voids in the lacquer, whereby the salmon may come in direct contact with the aluminium, resulting in miscolouring of the salmon. Furthermore, the lacquer easily cracks by the subsequent freezing of the packed product as well as by bending of the cardboard. The salmon boards are cut out from larger sheets, and by the cutting and rounding of the edges aluminium dust will appear on the cardboard members, this being unfortunate due to a miscolouring of the salmon as mentioned above.

According to GB-A-2,231,322 it is known to use a relatively thick core or base plate made of expanded polystyrene. At least one side of this plate, viz. the carrier side, is covered by a thin piece of carton, while this entire unit is mounted in a surrounding plastic sheet, preferably of polyethylene. The food product may thus be placed on a clean and food grade carrier surface, subject to a final wrapping in an exterior plastic film. Imprint such as a noble colour on the piece of carton will be visible through this wrapping film.

The present invention seeks to provide an analogous carrier plate in a substantially cheaper and easier manner, still based on the use of a thin and stiff cardboard plate.

The carrier plate according to the invention is defined as stated in claim 1.

The plastic sheet first of all eliminates the problems connected with the use of aluminium foil. Furthermore, by the invention it is also possible to avoid that the food products get in touch with the lacquer, this being achievable without the presence of special carton pieces, viz. in connection with the lamination itself. Thus, the plate product is ready for use merely after lamination by the two plastic sheets, this conditioning an easy and cheap production.

The colour imprint may be present on the inner side of at least the plastic sheet covering the carrier side of the cardboard plate, i.e. printed thereon in the negative. Such an imprint is easy to provide as a grouped print on a wide plastic web which can then be laminated to a corresponding cardboard web prior to the final products being stamped or cut out therefrom.

Alternatively, in order to provide for a desired colouring, it is possible to make use of a dyed glue for the very lamination.

Compared with the colouring by lacquering the upper surface of the plastic sheet a small difference in the hue of the colours may be experienced, but this is fully acceptable as the advantage is achieved that the food product can now be laid on an approved plastic film and not on a lacquer surface.

The detailed choice of material for the plastic sheets will depend on the practical use of the invention; as examples can be mentioned polyethylene, polyester, polypropylene and polystyrene. The cardboard plate itself may be a stratified or laminated product. It will be appreciated that it may still be based on natural fibres (cellulose), as the plastic film coating will provide protection against intrusion of moisture into the surfaces.

## Claims

1. A backing plate for the packing of food products, preferably salmon parts, and comprising a core plate having both opposed sides covered with food grade plastic sheet material and exhibiting a presentable colour, originating from dyestuff inside of the outer surface of the cover sheets, these outer surfaces being uncoated and unim-printed, **characterized in that** the core plate is of the cardboard type and **in that** the food grade plastic sheets are laminated directly onto the surfaces of the core plate such that the resulting surfaces still exhibit the colour of the said dyestuff.

2. A backing plate according to claim 1, in which at least one of the opposed plastic sheets is colour imprinted in the negative on its surface facing the cardboard plate.

3. A backing plate according to claim 1, in which at least one of the two plastic sheets are secured to the cardboard plate by means of a coloured lamination glue visible from the outside of this cover sheet.

4. A method of manufacturing a backing plate according to claim 2, **characterized in** providing a wide plastic sheet web with grouped imprint for the coverage of a plurality of cardboard blanks, laminating this web to a side of a corresponding cardboard web with the imprint facing this web, and cutting the resulting web into individual backing plates.

## Patentansprüche

1. Eine Unterlagsplatte für das Verpacken von Lebensmitteln, vorzugsweise von Lachsstücken, und die eine Kernplatte umfasst, wovon die beiden entgegengesetzten Seiten mit einem lebensmittelverträglichen Plastikfoliematerial gedeckt sind, und die eine präsentable Farbe ausweisen, die von Farbestoff innerhalb der äußeren Oberfläche der Abdeckfolien stammt, wobei diese äußere Oberflächen nicht beschichtet und nicht druckvermerkt sind, **dadurch gekennzeichnet, dass** die Kernplatte vom Papptyp ist, und dass die lebensmittelverträglichen Plastikfolien direkt auf den Oberflächen der Kemplatte laminiert sind, so dass die ergebenen Oberflächen immer noch die Farbe des erwähnten Farbstoffes ausweisen.

2. Eine Unterlagsplatte nach Anspruch 1, worin mindestens eine der entgegengesetzten Plastikfolien im Negativ auf deren Oberfläche farbvermerkt ist, die der Papplatte zugekehrt ist.

3. Eine Unterlagsplatte nach Anspruch 1, worin mindestens eine der beiden Plastikfolien an der Papplatte mittels eines gefärbten Laminationsklebstoffes befestigt ist, das vom außen dieser Abdeckfolie sichtbar ist.

4. Ein Verfahren zur Herstellung einer Unterlagsplatte nach Anspruch 2, **dadurch gekennzeichnet, dass** ein breite Plastikfoliebahn mit gruppiertem Druckvermerk für die Abdeckung einer Mehrheit von Werkstücken aus Papp vorgesehen ist, die diese Bahn zu einer Seite einer enstsprechenden Pappbahn mit dem Druckvermerk dieser Bahn zugekehrt laminieren, und die die ergebene Bahn in individuelle Unterlagsplatten schneiden.

## Revendications

1. Support pour emballer des produits alimentaires, de préférence des parties de saumon, et comprenant une plaque porte-noyaux comportant les deux côtés opposés couverts de matière de feuille plastique comestible et présentant une couleur présentable provenant d'une matière colorante à l'intérieur de la surface extérieure des feuilles de couverture, ces surfaces extérieures étant non revêtues et non imprimées, **caractérisé en ce que** la plaque porte-noyaux est du type carton et que les feuilles plastiques comestibles sont stratifiées directement sur les surfaces de la plaque porte-noyaux de sorte que les surfaces résultant montrent toujours la couleur de ladite matière colorante.

2. Support selon la revendication 1, par où au moins une des feuilles plastiques opposées est imprimée en couleur dans le négatif sur sa surface orientée vers la plaque de carton.

3. Support selon la revendication 1, par où au moins une des deux feuilles plastiques est fixée à la plaque de carton à l'aide d'une colle de stratification colorée visible de l'extérieur de la feuille de couverture.

4. Procédé de fabrication d'un support selon la revendication 2, caractérisé en prévoyant une large bande de feuille plastique avec empreint groupé pour la couverture d'une pluralité de pièces de carton, stratifiant cette bande à un côté de la, bande de carton correspondante avec l'empreint orienté vers cette bande et coupant la bande résultante en plaques de support individuelles.
